# EUROPEAN PATENT SPECIFICATION

(11) **EP 1 533 949 B1**
(45) Date of publication and mention of the grant of the patent: **27.12.2006**
(21) Application number: 03026636.5
(22) Date of filing: 19.11.2003
(51) Int. Cl.: H04L 12/56

(54) **Communication subsystem controlled information dissemination**
Kommunikationssubsystemgesteuerte Informationsverteilung
Diffusion d'informations controlée par un sous-système de communication

(43) Date of publication of application: 25.05.2005
(73) Proprietor: Sony Deutschland GmbH, 10785 Berlin (DE)
(72) Inventor: Hamdan, Amen Sony Int'l. (Europe) GmbH, 70327 Stuttgart (DE)
(74) Representative: Körber, Martin Hans

(56) References cited:
- EP-A- 0 913 970
- WO-A-01/60011
- US-A- 5 944 843

## Description

The present invention is related to a dissemination of data through a network using piggybacking methods, whereby the piggyback data distribution is controlled by a communication subsystem formed by the nodes on the network.

The concept of information dissemination describes a process for forwarding messages to a multitude of nodes within a network.

Particularly in networks where the explicit creation of communication links between a source node providing data and a target node receiving the data provided consumes a considerable amount of resources like for instance in the form of power consumption or computing power, sending information to all nodes in the network is typically avoided. This applies in particular to a dissemination of a small amount of data with low priority that has to be sent to a great number of nodes. The described is above all relevant for networks where no broadcast medium is available. Sending a message to all nodes in such a network requires creating an explicit network connection for each target node thus depleting the resources available.

Sending information to all nodes in the network is further questionable in networks which architecture provides only a comparatively expensive broadcasting mechanism.

Information dissemination schemes are known for very specialised domains like e.g. sensor networks as described in 'Adaptive Protocols for Information Dissemination in Wireless Sensor Networks' by Wendi Heinzelman, Joanna Kulik, and Hari Balakrishnan, Proceedings of the 5th ACM/IEEE MobiCom Conference, August 1999. The herein described information dissemination is based on distributing the respective information directly via explicit network connections. The establishing of an explicit network connection, i.e. a connection between defined nodes of the network, is accomplished by the lower-layers of the network architecture. This technology cannot be adapted to existing unspecialised network technologies.

For reducing the data traffic on a network, so called piggybacking techniques are employed which allow sending data on top of other messages exchanged through the network. Piggybacking mechanisms are well known and e.g. used in TCP systems as for instance described in 'Transmission Control Protocol', Information Sciences Institute, University of Southern California, 1981 and also other system like the one described in 'Study of Piggybacked Cache Validation for Proxy Caches in the World Wide Web', Balachander Krishnamurthy and Craig E. Wills, Proceedings of the USENIX Symposium on Internet Technologies and Systems, Monterey, California, 1997.

Another piggybacking mechanism is disclosed in US5944843.

Although these piggybacking mechanisms reduce the number of messages to be sent through a network by using one single transmission for transporting two or more different messages, the known mechanisms consume quite a lot of energy and computing resources as all protocols necessary for implementing a piggybacking technique are fully executed by higher layers. I.e. messages that are received from the network by the lower layer communication system of the network architecture are passed to the higher layers for further processing. There the messages are analysed and managed. When the message is further forwarded it has to be aggregated with others again and then sent back to the lower layers for further transmission.

Despite consuming a lot of resources, not all type of traffic like e.g. lower-layer beacon messages present in a network can therefore be used as a carrier for piggybacked data as these are not handled by the higher layers. As a further drawback of the known systems it has to be mentioned that an application processor operating in the higher layer application subsystem of the network architecture always has to be active for evaluating and aggregating the messages. A piggybacking of data is up to now only used to either send messages from one node to another or it is restricted to a certain application domain.

It is therefore an object of the present invention to propose a method and a network structure that allow the dissemination of data throughout a network in a resource-preserving manner.

This object is achieved by the invention as defined in the independent claims.

The method according to the present invention enables a dissemination of body data throughout a network by providing steps for forming a data package in a source node providing the body data by attaching to the body data forwarding data which specify dispatching details for the body data, piggybacking the data package on a message which is destined to be sent from the source node to a receiving node through an explicit network connection, sending the message with the piggybacked data package from the source node to the receiving node by means of the explicit network connection established between both nodes, receiving the message with the piggybacked data package on the receiving node and separating the data package from the message, splitting up the data package into the forwarding data and the body data, evaluating the forwarding data and passing on a copy of the body data to the application subsystem of the receiving node in case the receiving node is stated as an addressee in the forwarding data, modifying the forwarding data by removing from it the receiving node if stated as an addressee therein, forming a modified data package in the receiving node by attaching the modified forwarding data to the body data, piggybacking the modified data package on a further message which is destined to be sent from the receiving node to a further receiving node through a further explicit network connection, and sending the further message with the piggybacked modified data package from the receiving node to the further receiving node by means of the further explicit network connection established between both nodes, whereby each step is performed within the communication subsystem of each node concerned.

The present invention further comprises a node for disseminating body data throughout a network, whereby the node comprises an application subsystem for providing the execution space for high-level data processing and a communication subsystem for providing the execution space for low-level data processing. The communication subsystem is hereby adapted to enable a data transmission to a further node on the network and further contains an information dissemination means for disseminating body data throughout the network in correspondence to a method according to the present invention.

The present invention is further represented by a network for disseminating body data from a source node to one or more receiving nodes, whereby at least the source node and a receiving node correspond to a node according to the present invention, thereby forming on the network an application subsystem for providing the execution space for high level information processing and a communication subsystem for providing the execution space for low level information processing. The communication subsystem hereby contains an information dissemination means for disseminating body data throughout the network in correspondence to a method according to the present invention.

The present invention not only allows distributing data throughout a network without having to create an additional explicit network connection between nodes on the network but also further saves bandwidth and resources available on the network, by implementing the piggybacking within the communication subsystem. The present invention allows further to implement sending a message to all nodes in a network in a resource-preserving manner in already existing systems where broadcasting is not provided and without requiring a major rework of the systems. The present invention will further benefit in networks where a broadcasting of management information is done on an unreliable, low bandwidth channel and therefore most likely provides a higher transmission range than regular messages, thus allowing data to be piggybacked on top of management data to be sent to more nodes than via standard messages.

Further developments are set forth in the dependent claims.

The communication subsystem is favourably defined by the execution space for low-level information processing and data transmission allowing implementing the piggybacking method within the transport oriented layers of a network architecture. Hereby the communication subsystem is an execution space suitably formed by a Link Layer Control with a Medium Access Control and/or by a Data Link Control restricting the dissemination of piggybacked data to the lower network layers for saving resources.

To achieve a target-oriented delivery of the body data, each message for piggybacking the data package is selected on condition that the receiving or further receiving node for the message is listed as an addressee in the forwarding data of the package.

The piggybacking of the data package on a message is effectively implemented by adding one or more additional fields to the message frame containing the message, and taking in the data package in additional fields. In a further embodiment of the present invention, the data package is piggybacked on a message by taking in the data package in one or more fields of the message frame containing the message and which are reserved for use by an application allowing to effectively use existing transport capabilities provided by a message frame. Hereby, the presence of a data package in the message frame is indicated within an existing field or within an added field, both in the header of the message frame for to enable an identification of the payload in the fields reserved for an application to resemble a data package.

Alternatively, the data package is piggybacked on a message contained in a message frame by replacing an information in a message frame with the data package for not to increase the size of the message frame. Particularly, if the information to be replaced is redundant information, the density of information transmitted is increased without any losses of information. For an easy handling of the replacement operation, a respective replacement of the redundant information is favourably indicated in a preceding message frame or is restricted to predefined message frames out of a series of message frames carrying the redundant information like e.g. on every n^{th} frame carrying the redundant information.

The replacement of information may also be indicated within the message frame containing the message to enable a direct identification of the piggybacked data package. The indication is preferably given in an existing field of the header of the message frame or in a field added to the header of the message frame. In a further preferred embodiment of the present invention, the indication of the replacement of the information is given by an indicator known to the communication subsystem, whereby the indicator may suitably be formed by the address of the source node. According to an advantageous development, the indication of the replacement of the information is made available by means of an orthogonal Cyclic Redundancy Check being successful on the proper kind of message only.

In an alternative embodiment of the present invention the body data contain only an announcement information related to delivery details for data which are ready for collection by a receiving node or a further receiving node through means of an explicit network connection with a source node. In this way, the announcement can be distributed to the nodes without overburdening the network while the actual data are then distributed according to the network requirements.

To avoid any further burdening of the network, the data package is preferably piggybacked on a message by putting it in a segment of the payload section of the message frame, which is spared by the message contained in it.

The present invention achieves a saving of resources by handling the dissemination of body data exclusively within the communication subsystem. But the dissemination of some body data require some application level knowledge, which would according to the prior art involve the application or host subsystem, respectively. To exclude a respective involvement of the host subsystem, the present invention may advantageously provide forwarding data, which contain one or more forwarding rules inserted from an application. The forwarding rule hereby effectively contains an indication of the application establishing the rule. Further, for deciding on how to forward the data package based on the forwarding rules, the communication subsystem may be implemented with a forwarding decision means.

The forwarding data may suitably contain two or more different forwarding schemes allowing an adaptation of a forwarding process to current network connection conditions. An identifier present in the forwarding data may hereby favourably determine each forwarding scheme. The data related to a forwarding scheme are preferably encoded within the body data.

To make sure that the network is not flooded with undeliverable data packages, the forwarding data therein preferably contain time-to-live information defining a time limit for forwarding the body data in the data package.

The piggybacking of the data package on a message destined to leave a node is effectively accomplished by a message multiplexer contained within the dissemination means of the communication subsystem established on that node. The separation of a data package from an incoming message is preferably accomplished by a message demultiplexer, which is also implemented within the dissemination means of the respective node.

For enabling the evaluation of the forwarding data and a corresponding handling of the related body data and data packages, the communication subsystem preferably comprises a forwarding means for controlling the dispatching of the body data in combination with the piggybacking process.

In the following description, the present invention is explained in more detail with respect to special embodiments and in relation to the enclosed drawings, in which
- Figure 1: shows an overall view of network architecture according to the present invention,
- Figure 2: shows a formation of information dissemination within a communication subsystem according to the present invention,
- Figure 3: shows the fundamentals of a method for implementing information dissemination according to the present invention,
- Figure 4: shows a data frame without (a) and with (b) an unused space in the payload section,
- Figure 5: is a schematic representation of an application dependent forwarding control, and
- Figure 6: shows a flowchart giving an example of a control flow for information dissemination according to the present invention.

The present invention is based on the insight, that a considerable part of the resources consumed by the customary piggybacking techniques can be put down to the fact that usage is made of higher application oriented layers of a network architecture. This is particularly detrimental for wireless network applications where nodes rely on a limited energy resource like e.g. a battery power supply.

The usage of the application oriented layers for piggybacking data is also responsible for the further fact that not all types of data traffic available on a network can be utilised for piggybacking. This concerns the data transmission techniques handled exclusively by the transport oriented lower layers of network architecture. To make use of the entire data traffic available on a network, the present invention proposes an information dissemination mechanism based on a piggybacking technique that is directly implemented in the transport oriented lower layers of network architecture. Thus, currently unused bandwidth is made available for exchanging messages between nodes on the network.

The details of network architecture differ considerably between different types of networks. But two subsystems can generally be told apart, the application subsystem and the communication subsystem. The application subsystem or host processor subsystem, respectively, is defined by the execution space of applications and the hereto-required components of the operating system. The communication subsystem however is defined by the execution space of communication related processes like e.g. a data link control (DLC) and/or a link-layer control (LLC). Some hardware components may possibly be required for implementing each subsystem.

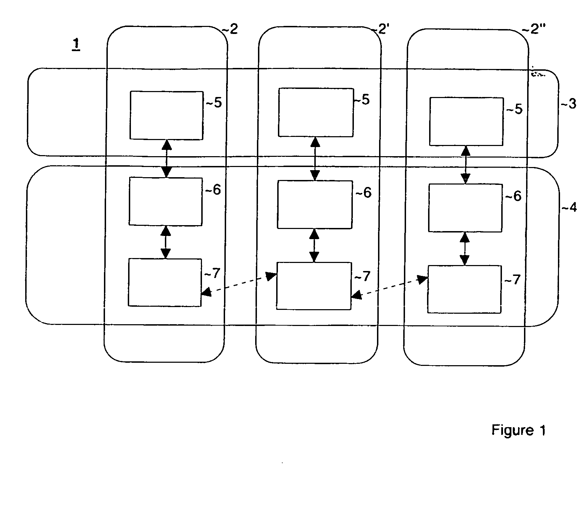

An overall view of network architecture according to the present invention is shown in Figure 1. Each node 2, 2' or 2" on the network 1 comprises an application processor 3 handling the high-level information processing 5 of the application subsystem and a communication processor 4 handling the low-level information processing 6 of the communication subsystem. The communication processor further manages the data transmission 7 between the nodes 2, 2', and 2" on the network. Both processors operate independent from each other allowing one to be inactive while the other is still busy. The implementation of information dissemination according to the present invention thus saves resources by allowing the higher layer process to be put in a sleep mode. With the present invention, higher layers are not required for distributing the data thus reducing the amount of communication between the lower layers and some computations on the higher layers, eventually leading to a reduced utilisation of resources.

It is to be noted, that information processing and data processing are generally regarded as synonyms within the context of this description as data are looked at as carriers of information.

The invention is not restricted to a self-contained network but also covers crosslinked networks, allowing exchanging information between individual networks by means of an interconnecting device like e.g. a router, which is part of the communication subsystem. The forwarding of a data package from its original or an intermediate network to the network of its target node is usually based on the current understanding of the state of the networks the interconnecting device is linked to. The routing protocols like e.g. OSFP (Open Shortest Path First) and AODV (Ad hoc On-Demand Distance Vector) specify how and when a message has to be sent from one network to another, but provide no means which enables the sending of additional data on top of already existing data traffic.

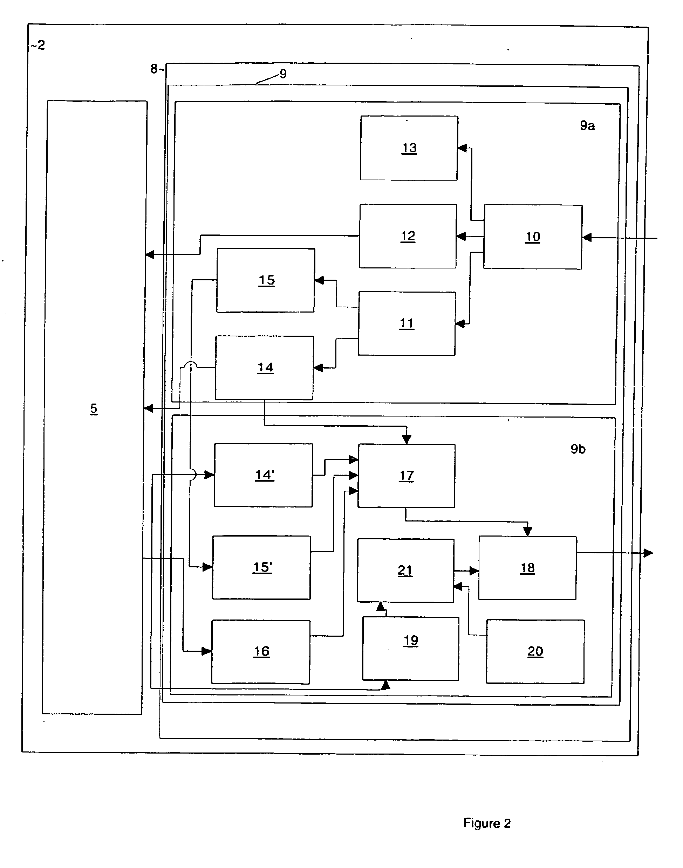

The more detailed representation of Figure 2 shows an implementation of the present invention on a node 2 with an information dissemination system formed within a communication subsystem 8. The formation of the dissemination means is preferably realised within a MAC/LLC (Medium Access Control / Logical Link Control) standard of the communication subsystem 8. This allows the distribution of smaller messages to numerous target nodes without requiring additional bandwidth.

In general there is no distinction with regard the content of data distributed by means of piggybacking and the content of data or messages, respectively, used as carriers for the piggybacked data. But the affiliated data traffic is different. The data, which might be used as a carrier for the piggybacked data, are forwarded in form of an explicit traffic, which means that these data are forwarded using an explicit network connection. An explicit network connection is established between a source node and one or a number of target nodes. It may also include all target nodes like e.g. in the case of broadcasting or management information. The data traffic caused by distributing piggybacked data is implicit data traffic, as it does not directly require an establishing of an explicit network connection from a source node to the destination or target nodes, respectively. It is just superimposed on the already existing explicit data traffic.

The communication subsystem 8 comprises a dissemination means 9 managing the implicit data traffic in combination with the explicit data traffic. For the sake of a concise description of the invention, the data distributed by means of implicit data traffic are in the ongoing referred to as body data, while the data distributed by means of explicit data traffic are referred to as messages. These expressions mean no restriction to the content of the data itself.

The body data are provided with forwarding information attached to the body data in form of forwarding data. Attaching the forwarding data to the body data may also include some encoding mechanisms. The body data together with the forwarding data attached form a data package. This data package is piggybacked on a message destined to be sent by means of an explicit network connection through a known piggybacking mechanism or through a piggybacking mechanism described below.

The dissemination means 9 is subdivided into a receiving section 9a and a transmitting section 9b. The receiving section 9a contains a message demultiplexer 10 for separating the piggybacked data package 11 from the message carrying it. The message is usually composed of content data 12 bound for a distribution by explicit data traffic and internal management data 13 necessary to implement the respective explicit data distribution on a network. The message demultiplexer 10 separates both message components, and the explicitly sent data 12 (the content data) are forwarded to the higher layers 5 for further processing.

The implicitly sent piggybacked data package 11 is separated in the receiving section 9a into the body data 14 and the forwarding data 15. The receiving section 9a of the dissemination means checks the content of the forwarding data 15 for an entry regarding the address of the current node 2. In case the host node 2 is listed in the forwarding data 15 and only in this case, a copy of the body data 14 will be forward to the higher layers 5. The entry for the host node will then be deleted from the forwarding data 15 before these are passed on as modified forwarding data 15' to the transmitting section 9b of the dissemination means 9 together with the body data 14. If the host node 2 was the only entry in the forwarding data 15, the last process step will be omitted.

In the transmitting section 9b of the dissemination means 9 body data are received from the receiving section 9a of the dissemination means 9 and from the higher layers 5. If body data are present from both sources, they may be combined in one data package on condition that the forwarding scheme, i.e. the dispatch information represented by the modified forwarding data 15' is identical for the body data 14 and 14' of both sources, like for instance in the case of broadcasting. Usually each unit of the body data 14 from the receiving section and 14' from the higher layers are handled separately and handed over to the data package former 17 with its individual forwarding data 15' and 16, respectively.

Content data 19 for messages to be transmitted are received by the transmitting section 9b from the higher layers 5. They are combined with internal management data 20 to a message 21. The message multiplexer 18 then piggybacks the data package 17 on the message 21 and transmits it to one or more nodes defined in the internal management data 20 by means of an explicit network connection. The message multiplexer 18 may either piggyback a data package 17 on whatever message 21 is just available, or select the message according to a match between the entries in the modified forwarding data 15' and the internal management data 20. If no dedicated addressee is given in the forwarding data of the data package, the next node may be selected in a way that ensures that all nodes will receive the message after some time. The evaluation of the forwarding data and the corresponding handling of the body data and data packages is accomplished by a forwarding means which is not shown in Figure 2 but implemented within the dissemination means 9.

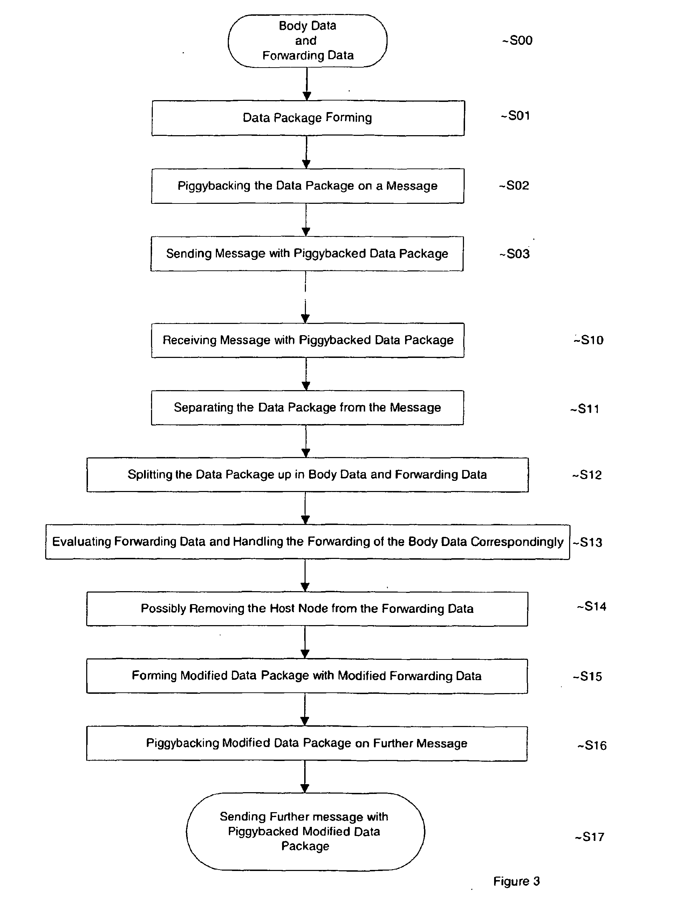

The fundamental steps of the method performed by the dissemination means 9 are illustrated in Figure 3. The body data with the related forwarding data are prepared in the source node in step S00. Both are put together in the following step S01 to form a data package, which is then piggybacked in step S02 on a message destined to be sent from the source node to one or more receiving nodes by means of an explicit network connection. Next in step S03, the message with the data package piggybacked on it is transmitted through the explicit network connection established between the source node and each of the receiving nodes.

A dashed arrow to emphasise that the method is continued on a different node, strictly speaking on a receiving node beginning with the next step S 10 indicates the transmission over the network connection. After receiving the message with the piggybacked data package in step S 10, the data package is first separated in step S11 from the message having acted as its carrier before the data package itself is split up in step S12 into its constituting components, the body data and the forwarding data. On the receiving node, or to be more precisely, by the receiving section of the dissemination means on the receiving node, the forwarding data are evaluated in step S 13 to determine if the current node is listed as a recipient in the forwarding data and if further destinations are given therein. If the current host node is noted as an addressee for the body data, a copy of the body data is forwarded to its higher layers, i.e. the application subsystem of the current node. If no further addressees are found in the forwarding data, no further forwarding of piggybacked data is necessary and the method will come to an end at this step.

In general, one or more destination addresses different from the current node are found in the forwarding data, so that the process continues. If the current node has been defined as an addressee in the forwarding data, deleting therein the respective entry in step S14 modifies these. The thus modified forwarding data are then combined with the body data in step S15 to form a modified data package which is then piggybacked on a message destined to be sent to a further receiving node in step S16. This message with the modified data package piggybacked on it is finally sent to the one or more further receiving nodes by means of an explicit network connection in step 17. The process is continued on these further receiving nodes with step S 10 and will be carried on until each node listed in the forwarding data has received the accompanying body data.

The piggybacking of a data package is preferably accomplished by adding some additional payload on top of management frames, like e.g. beaconing messages. One possibility hereto is to add some special fields to existing frames and to use these for taking up the piggyback information when required in form of a data package described above. Some network protocols already provide some extra fields, which are reserved for, use by applications and which can also be used for the given purpose, like e.g. the 8-bit service field in the 'Physical Layer Convergence Protocol' (IEEE 802.11 PLCP). Some network protocols require an indication that piggybacked data exist in the message. Hereto additional fields are set in the header of the management frame. When body data have to be sent within a certain length of time to all nodes of a network, periodically sent management messages like for instance beacon messages are used.

An alternative piggybacking mechanism to be put into effect by the dissemination means 9 according to the present invention involves the replacement of some management data of a management frame with a data package payload. This concerns primarily redundant information that is not required in each case like for instance information that is added to each frame by the source node and could therefore easily be reconstructed from the context of the transmitted frames. It is sufficient to have the respective data sent only one time or at regular intervals so that the occupied space can be used for piggybacking data packages on the rest of the messages.

In this case the exchange of data has to be performed in a defined way, so that the receiving node will not misinterpret the data content. This can be achieved for one by sending a small indication of the replacement operation along with a preceding message. Alternatively a message at a certain position in a line of successive messages, like e.g. every third in a sequence of five messages, will per default be used to have the redundant information replaced by piggybacked data. Using some in-message indication of the exchanged content provides a second alternative. The indication is either given in an additional header field, or by using a defined source node address which in itself represents the indication of the message to be in a certain format, i.e. carrying the piggybacked data package. But also orthogonal CRC's. (Cyclic Redundancy Check) can be used to identify the different kinds of messages. To retrieve the content of a message all available CRC's are applied to it whereby the one succeeding indicates the kind of the present message.

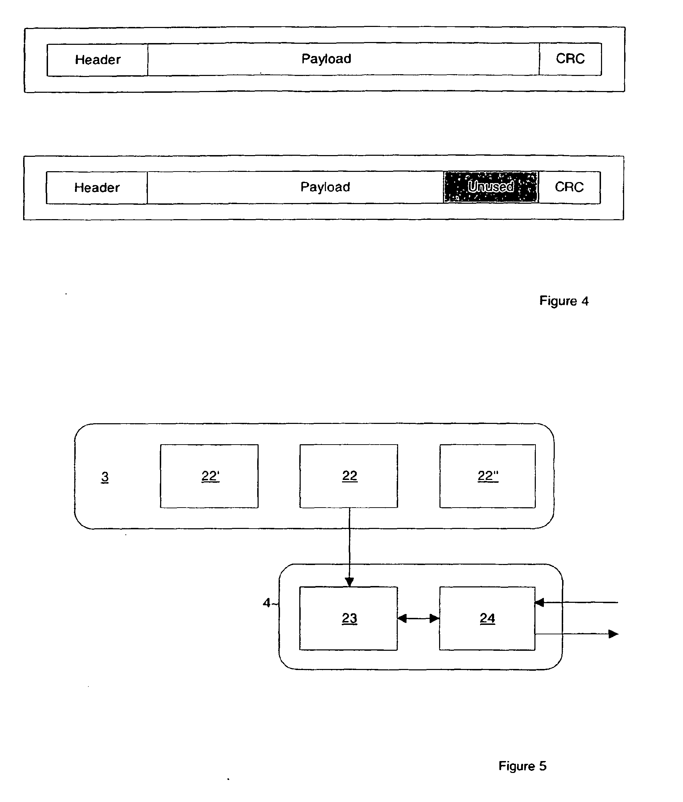

The dissemination means 9 is also adapted to utilise unused parts of a message frame. This is particularly useful in network systems that feature a fixed length data frame format with the consequence of some parts reserved for a payload being unused in a multitude of message frames as illustrated for data frame (b) in Figure 4. These unused payload space is used to take in a data package so that it is transmitted piggybacked with the message.

Different from what has been explained before, the data package may in some cases, where the size of a body data unit exceeds the space available in messages for piggybacking data be only composed of the forwarding data and an announcement that the actual body data are being ready for delivery. The actual body data then either have to be explicitly requested from the source node by the nodes having received the delivery announcement or are forwarded after a certain period of time which is long enough to allow the receiving nodes being aware of the incoming body data. In both cases, the body data are sent separately by utilising other communication channels, which offer a higher bandwidth for transmission.

The content of the forwarding data is usually not restricted to listing the receiving nodes for the associated body data. Moreover, the forwarding data contain information, which is related to the circumstances under which the body data are to be delivered to their respective addressees, which is addressed as a forwarding scheme in this specification. In most of the cases the forwarding scheme will specify a so-called 'time-to-live', which defines a deadline for delivering the respective data package. Beyond the deadline any attempts to further forward the data package will be dropped to avoid flooding the network. Instead of indicating defined receiving nodes for the body data, the forwarding scheme may define a certain group of nodes or some specific kinds of nodes or only a certain number of arbitrary nodes for the delivery.

As the forwarding process according to the present invention is handled by the communication subsystem of the network architecture only, the information dissemination is decoupled from the application subsystem. This allows the application processor being in sleep mode, while the communication processor handles the information dissemination. But the forwarding of some types of body data requires some application level knowledge for to be accomplished correctly. To avoid involving the application processor in carrying out a respective application dependent forwarding control, the related application knowledge is transferred to the communication subsystem such, that the communication processor is enabled to act on behalf of the application processor. Exclusively the lower layers of the network architecture herewith handle the information dissemination while application specific information dissemination can still be achieved.

The transfer of the application knowledge is implemented by allowing a respective application 22 to insert evaluation rules 23 regarding the dispatching information of a certain type of body data into the execution space 4 of the communication subsystem as shown in Figure 5. These application based evaluation rules 23 are then processed by a forwarding decider 24 of the communication processor 4 for evaluating dispatching details. The evaluation rules 23 can have the form of some code that has to be executed for a certain kind of body data, of code that is added to the body data themselves and that will be executed on every node receiving the body data or of simple metrics, that is executed according to the body data.

The evaluation rules 23 not only specify details on the forwarding process specific for a certain application 22, 22' or 22", but also further allow performing some data fusion, i.e. to collect and evaluate some data within the communication subsystem. The identification of an application 22 requiring the processing of specific evaluation rules 23 can be indicated in the body data either directly or indirectly, e.g. by using some inherent knowledge of the data structure used for the body data. Applying an application specific rule to all body data may further identify the application 22, 22' or 22" and checking for which body data a proper result was obtained. Encoding or enriching the body data in an application specific way, like e.g. interweaving some fingerprint identifying the respective application, may also accomplish the indication of the application in the body data.

The forwarding data can further accommodate more than one forwarding scheme. Each node involved in the dissemination process is thus enabled to select the forwarding scheme, which is appropriate for him with regard to the current body data. The selection is based on a correct determination of the forwarding schemes to what end an indication may for instance be given within the body data, e.g. within the first n bit. Differently, the determination of the correct forwarding scheme may be based on some application knowledge as described above or by encoding or enriching the body data in a forwarding specific way, e.g. by using some orthogonal CRC's, hash-codes or the like.

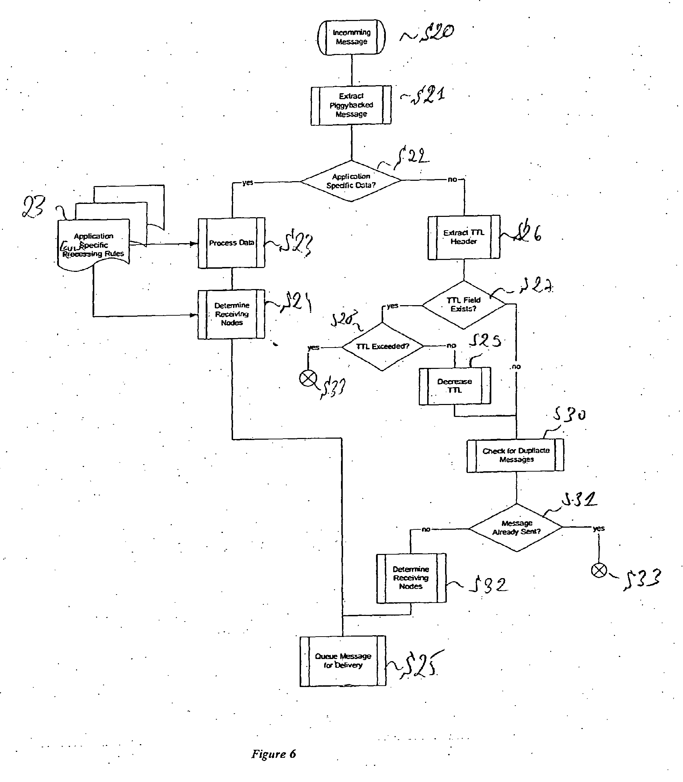

An example of a control flow regarding information dissemination according to the present invention is given in Figure 6. A receiving section 9a of the dissemination means on a node receives an incoming message in step S20, and extracts from it the piggybacked data package 11 in step S21. If the data package contains some application specific data as described above, and which is evaluated in step S22, the application specific evaluation rules 23 are used to process the data in step S23 and to determine the receiving nodes in the following step S24 before being queued in step S25. for being piggybacked on a message destined to be transmitted over the network 1 by the transmitting section 9b of the dissemination means 9.

If the data package contains no application specific data, the process proceeds from step S22 with step S26, where the data are checked for an indication of time-to-live information. On respective information found available in step S27, the system checks the time-to-live information for being already exceeded, and if so aborts any further forwarding in step S33. Else, the time-to-live value is decreased by a certain amount in step S29 before the system is checked for the presence of duplicate body data in step S30, which succeeds step S27 immediately in case no time-to-live information is identified in step S27. If it is found in the following step 31, that the body data have already been sent, the further forwarding of the data package is aborted in step S33. If not, the receiving nodes are determined in step S32, and the data package is queued for delivery piggybacked on a message in step S25.

The decision on whether body data have to be resend is implemented by using hashes of the body data themselves. If a hash was already processed within some time ago, the body data will not be forwarded. A more precise dissemination control flow than that of Figure 6 utilises the source node address and a sequence number. But as this involves a transfer of additional data, which is generally to be avoided in order to conserve resources, this implementation is limited to only a few cases.

The present invention allows disseminating certain information, particularly information of modest data volume without putting extra load on the network. It is for instance useful for distributing an indication of a device or service available on a network or for distributing some network status information like e.g. the current bandwidth on a certain node, the number of connections or the like. Other application include e.g. a dissemination of routing information like the current routing tables of a node, an implementation of some simple broadcasting within network systems where such is not provided or very resource consuming, or a dissemination of data used for synchronising or updating distributed data structures.

Another application scenario is given by a wireless, ad-hoc, multi-hop network in which any communication besides some management frames is done in an encrypted manner. To enable encryption between two nodes in these networks requires establishing some trust between them. Hence some means to communicate between untrusted nodes is by piggybacking the data on top of the unencrypted management frames according to an embodiment of the present invention.

The present invention hereto provides a kind of a low-profile means for sending small amounts of data to a number of nodes within a network, e.g. data which transport information about a device or service availability, routing information, QoS parameter or the like. It implements an additional low-profile communication channel within an existing network on top of the already existing data traffic. The present invention thus saves bandwidth and resources.

## Claims

1. Method for disseminating body data throughout a network (1) with steps for
- forming a data package (11) in a source node (2, 2', 2") providing the body data (14, 14') by attaching to the body data forwarding data (15, 15') which specify dispatching details for the body data (14, 14'),
- piggybacking the data package (11) in the source node (2, 2', 2") on a message (21), which is destined to be sent from the source node (2, 2', 2") to a receiving node (2, 2', 2") through an explicit network connection,
- sending the message (21) with the piggybacked data package (11) from the source node to the receiving node by means of the explicit network connection established between both nodes,
- receiving the message (21) with the piggybacked data package (11) on the receiving node (2, 2', 2") and separating the data package (11) from the message (21),
- splitting up the data package (11) in the receiving node (2, 2', 2") into the forwarding data (15) and the body data (14),
- evaluating the forwarding data (15) in the receiving node (2, 2', 2") and passing on a copy of the body data (14) to the application subsystem (5) of the receiving node (2, 2', 2") in case the receiving node is stated as an addressee in the forwarding data (15),
- modifying the forwarding data (15) in the receiving node (2, 2', 2") by removing from it the receiving node if stated as an addressee therein,
- forming a modified data package (15') in the receiving node (2, 2', 2") by attaching the modified forwarding data (15') to the body data (14, 14'),
- piggybacking the modified data package in the receiving node (2, 2', 2") on a further message (21) which is destined to be sent from the receiving node (2, 2', 2") to a further receiving node (2, 2', 2") through a further explicit network connection, and
- sending the further message (21) with the piggybacked modified data package from the receiving node (2, 2', 2") to the further receiving node (2, 2', 2") by means of the further explicit network connection established between both nodes,
whereby each step is performed within the communication subsystem (4) of each node (2, 2', 2") concerned.

2. Method according to claim 1,
**characterised in**
**that** the communication subsystem is defined by the execution space for low-level information processing (6) and data transmission (7).

3. Method according to claim 2,
**characterised in**
**that** the communication subsystem is an execution space formed by a Link Layer Control and a Medium Access Control.

4. Method according to claim 3,
**characterised in**
**that** the execution space of the communication subsystem comprises a Data Link Control.

5. Method according to one of the claims 1 to 4,
**characterised in**
**that** each message (21) for piggybacking the data package (11) is selected on condition that the receiving or further receiving node for the message is listed as an addressee in the forwarding data (15) of the data package (11).

6. Method according to one of the claims 1 to 5,
**characterised in**
**that** the data package (11) is piggybacked on a message (21) by adding one or more additional fields to the message frame containing the message and taking in the data package in the additional fields.

7. Method according to one of the claims 1 to 5,
**characterised in**
**that** the data package (11) is piggybacked on a message (21) by taking in the data package in one or more fields of the message frame containing the message which are reserved for use by an application.

8. Method according to claim 7,
**characterised in**
**that** the presence of a data package (11) in the message frame is indicated within an existing field or within an added field, both in the header of the message frame.

9. Method according to one of the claims 1 to 8,
**characterised in**
**that** the data package (11) is piggybacked on a message (21) contained in a message frame by replacing an information in a message frame with the data package.

10. Method according to claim 9,
**characterised in**
**that** the information to be replaced with the data package (11) is a redundant information.

11. Method according to claim 10,
**characterised in**
**that** the replacement of the redundant information is indicated in a preceding message frame.

12. Method according to claim 10,
**characterised in**
**that** the replacement of the redundant information is restricted to predefined message frames out of a series of message frames carrying the redundant information.

13. Method according to claim 9,
**characterised in**
**that** the replacement of the information is indicated within the message frame containing the message (21).

14. Method according to claim 13,
**characterised in**
**that** the indication of the replacement is given in an existing field of the header of the message frame or a field added to the header of the message frame.

15. Method according to claim 13,
**characterised in**
**that** the indication of the replacement of the information is given by an indicator known to the communication subsystem (4).

16. Method according to claim 15,
**characterised in**
**that** the indicator is formed by the address of the source node (2, 2', 2").

17. Method according to claim 13,
**characterised in**
**that** the indication of the replacement of the information is made available by means of an orthogonal Cyclic Redundancy Check.

18. Method according to one of the claims 1 to 17,
**characterised in**
**that** the body data (14, 14') contain only an announcement information related to delivery details for data which are ready for collection by a receiving node (2, 2', 2") or a further receiving node (2, 2', 2") through means of an explicit network connection with a source node (2, 2', 2").

19. Method according to one of the claims 1 to 5,
**characterised in**
**that** the data package (11) is piggybacked on a message (21) by putting it in a segment of the payload section of the message frame which is spared by the message (21) contained in it.

20. Method according to one of the claims 1 to 19,
**characterised in**
**that** the forwarding data (15, 15') contains one or more forwarding rules inserted from an application (22, 22', 22").

21. Method according to claim 20,
**characterised in**
**that** the forwarding rule contains an indication of the application (22, 22', 22") establishing the rule.

22. Method according to claim 20 or 21,
**characterised in**
**that** the communication subsystem (4) comprises a forwarding decision means for deciding on how to forward the data package (11) based on the forwarding rules.

23. Method according to one of the claims 1 to 22,
**characterised in**
**that** the forwarding data (15, 15') contain at least two different forwarding schemes.

24. Method according to claim 23,
**characterised in**
**that** an identifier for each forwarding scheme is present in the forwarding data (15, 15').

25. Method according to claim 23 or 24,
**characterised in**
**that** data related to a forwarding scheme are encoded within the body data (11).

26. Method according to one of the claims 1 to 25,
**characterised in**
**that** the forwarding data (15, 15') contain a time-to-live information defining a time limit for forwarding the body data (14, 14').

27. A node for disseminating body data (14, 14') throughout a network, the node comprising an application subsystem (3) for providing the execution space for high level data processing (5) and a communication subsystem (4) for providing the execution space for low level data processing (6), whereby the communication subsystem is adapted to enable a data transmission (7) to a further node (2, 2', 2") on the network (1) and the communication subsystem (4) comprises an information dissemination means (9) for disseminating body data (11) throughout the network (1) corresponding to a method according to one of the claims 1 to 26.

28. A node according to claim 27,
**characterised in**
**that** the dissemination means of the communication subsystem comprises a message multiplexer (18) for piggybacking a data package on an outgoing message, whereby the data package is formed by the body data with attached forwarding data specifying the dispatching details for the body data.

29. A node according to claim 27 or 28,
**characterised in**
**that** the dissemination means of the communication subsystem comprises a message demultiplexer (10) for separating a data package from an incoming message, whereby the data package is formed by the body data with attached forwarding data specifying the dispatching details for the body data.

30. A node according to one of the 27 to 29,
**characterised in**
**that** the communication subsystem (4) comprises a forwarding means for evaluating forwarding data related to the body data and for controlling the piggybacking of a data package containing the body data based on the content of the forwarding data.

31. A network for disseminating body data from a source node to one or more receiving nodes, with at least the source node and one receiving node corresponding to a node (2, 2', 2") to one of the claims 27 to 30 thus forming on the network (1) an application subsystem (3) for providing the execution space for high level information processing and a communication subsystem (4) for providing the execution space for low level information processing, whereby the communication subsystem comprises an information dissemination means (9) for disseminating body data (14, 14') throughout the network corresponding to a method according to one of the claims 1 to 26.

## Patentansprüche

1. Verfahren zur Weitergabe von Hauptdaten über ein Netz (1), aufweisend die Schritte:
- Erzeugung eines Datenpakets (11) in einem Ursprungsknoten (2, 2', 2"), wobei Weiterleitungsdaten (15, 15') an die Hauptdaten (14, 14') angehängt werden, welche die Abfertigungsdetails für die Hauptdaten (14, 14') spezifizieren,
- Herstellung einer Huckepack-Verbindung im Ursprungsknoten (2, 2', 2") zwischen dem Datenpaket (11) und einer Nachricht (21), die vom Ursprungsknoten (2, 2', 2") an einen Empfangsknoten (2, 2', 2") über eine explizite Netzverbindung übertragen werden soll,
- Übertragung der Nachricht (21) mit dem Huckepack-Datenpaket (11) vom Ursprungsknoten zum Empfangsknoten über die zwischen beiden Knoten aufgebaute explizite Netzverbindung,
- Empfang der vom Ursprungsknoten übertragenen Nachricht (21) mit dem Huckepack-Datenpaket (11) am Empfangsknoten (2, 2', 2") und Abtrennung des Datenpakets (11) von der Nachricht,
- Aufteilung des Datenpakets (11) im Empfangsknoten (2, 2', 2") in die Weiterleitungsdaten (15) und die Hauptdaten (14),
- Auswertung der Weiterleitungsdaten (15) im Empfangsknoten (2, 2', 2") und Weiterleitung einer Kopie der Hauptdaten (14) zum Anwendungs-Subsystem (5) des Empfangsknotens (2, 2', 2"), falls der Empfangsknoten in den Weiterleitungsdaten als Adressat angegeben ist,
- Modifizierung der Weiterleitungsdaten (15) durch Löschen der Empfangsknoten-Adtesse im Empfangsknoten (2, 2', 2"), falls dieser darin als Adressat angegeben ist,
- Erzeugung eines modifizierten Datenpakets (15') im Empfangsknoten (2, 2', 2") durch Anhängen der modifizierten Weiterleitungsdaten (15') an die Hauptdaten (14, 14'),
- Herstellung einer Huckepack-Verbindung im Empfangsknoten (2, 2', 2") zwischen dem modifizierten Datenpaket (15') und einer weiteren Nachricht (21), die vom Empfangsknoten (2, 2', 2") an einen weiteren Empfangsknoten (2, 2', 2") über eine weitere explizite Netzverbindung übertragen werden soll,
- Übertragung der weiteren Nachricht (21) mit dem modifizierten Huckepack-Datenpaket vom Empfangsknoten (2, 2', 2") an den weiteren Empfangsknoten (2, 2', 2") über die weitere zwischen beiden Knoten aufgebaute explizite Netzverbindung,
wobei jeder Schritt im Kommunikations-Subsystems (4) jedes beteiligten Knotens (2, 2', 2") ausgeführt wird.

2. Verfahren nach Anspruch 1,
**dadurch gekennzeichnet,**
**dass** das Kommunikations-Subsystem durch den Ausführungsraum für hardwarenahe (bzw. niederwertige) Datenverarbeitung (6) und Datenübertragung (7) festgelegt wird.

3. Verfahren nach Anspruch 2,
**dadurch gekennzeichnet,**
**dass** das Kommunikations-Subsystem ein durch eine Sicherungsschicht-Verwaltung und eine Übertragungsmittelzugriffs-Steuerung erzeugtes Ausführungsprogramm ist.

4. Verfahren nach Anspruch 3,
**dadurch gekennzeichnet,**
**dass** der Ausführungsraum des Kommunikations-Subsystems eine Datenübertragungs-Steuerung enthält.

5. Verfahren nach einem der Ansprüche 1 bis 4,
**dadurch gekennzeichnet,**
**dass** jede Nachricht (21) für die Huckepack-Verbindung mit dem Datenpaket (11) unter der Bedingung ausgewählt wird, dass der Empfangs- oder der weitere Empfangsknoten für die Nachricht als Adressat in den Weiterleitungsdaten (15) des Datenpakets (11) aufgeführt ist.

6. Verfahren nach einem der Ansprüche 1 bis 5,
**dadurch gekennzeichnet,**
**dass** das Datenpaket (11) durch Anfügen eines oder mehrerer zusätzlicher Felder an den die Nachricht enthaltenden Nachrichtenrahmen huckepack mit einer Nachricht (21) verbunden und dass es in diese zusätzlichen Felder eingefügt wird.

7. Verfahren nach einem der Ansprüche 1 bis 5,
**dadurch gekennzeichnet,**
**dass** das Datenpaket (11) huckepack mit der Nachricht (21) verbunden wird, indem das Datenpaket in ein oder mehrere Felder des die Nachricht enthaltenden Nachrichtenrahmens eingefügt wird, die von einer Anwendung dafür reserviert werden.

8. Verfahren nach Anspruch 7,
**dadurch gekennzeichnet,**
**dass** auf das Vorhandensein des Datenpakets (11) innerhalb eines vorhandenen oder angefügten Feldes im Nachrichtenrahmen hingewiesen wird, wobei beide im Header des Nachrichtenrahmens enthalten sind,

9. Verfahren nach einem der Ansprüche 1 bis 8,
**dadurch gekennzeichnet,**
**dass** das Datenpaket (11) huckepack mit einer in einem Nachrichtenrahmen enthaltenen Nachricht (21) verbunden wird, indem eine Information in einem Nachrichtenrahmen durch das Datenpaket ersetzt wird.

10. Verfahren nach Anspruch 9,
**dadurch gekennzeichnet,**
**dass** die durch das Datenpaket (11) zu ersetzende Information redundant ist.

11. Verfahren nach Anspruch 10,
**dadurch gekennzeichnet,**
**dass** der Ersatz der redundanten Information in einem vorhergehenden Nachrichtenrahmen angezeigt wird.

12. Verfahren nach Anspruch 10,
**dadurch gekennzeichnet,**
**dass** der Ersatz der redundanten Information auf vorgegebene Nachrichtenrahmen aus einer Serie von Nachrichtenrahmen beschränkt ist, welche die redundante Information übertragen.

13. Verfahren nach Anspruch 9,
**dadurch gekennzeichnet,**
**dass** auf den Ersatz der Information innerhalb des die Nachricht (21) enthaltenden Nachrichtenrahmens hingewiesen wird.

14. Verfahren nach Anspruch 13,
**dadurch gekennzeichnet,**
**dass** auf den Ersatz in einem im Header des Nachrichtenrahmens vorhandenen oder darin eingefügten Feld hingewiesen wird.

15. Verfahren nach Anspruch 13,
**dadurch gekennzeichnet,**
**dass** auf den Ersatz der Information durch einen dem Kommunikations-Subsystem (4) bekannten Indikator hingewiesen wird.

16. Verfahren nach Anspruch 15,
**dadurch gekennzeichnet,**
**dass** der Indikator anhand der Adresse des Ursprungsknotens (2, 2', 2") erzeugt wird.

17. Verfahren nach Anspruch 13,
**dadurch gekennzeichnet,**
**dass** der Hinweis auf den Ersatz der Information mittels einer orthogonalen zyklischen Blockprüfung zur Verfügung gestellt wird.

18. Verfahren nach einem der Ansprüche 1 bis 17,
**dadurch gekennzeichnet,**
**dass** die Hauptdaten (14, 14') nur eine Ankündigungsinformation bezüglich der Abfertigungsdetails für Daten enthalten, die von einem Empfangsknoten (2, 2', 2") oder einem weiteren Empfangsknoten (2, 2', 2") über eine explizite Netzverbindung mit einem Ursprungsknoten (2, 2', 2") erfasst werden können.

19. Verfahren nach einem der Ansprüche 1 bis 5,
**dadurch gekennzeichnet,**
**dass** das Datenpaket (11) huckepack mit einer Nachricht (21) verbunden wird, indem es in ein Segment des Nutzinformationsabschnitts des Nachrichtenrahmens eingefügt wird, welches von der im Nachrichtenrahmen enthaltenen Nachricht (21) nicht belegt wird.

20. Verfahren nach einem der Ansprüche 1 bis 19,
**dadurch gekennzeichnet,**
**dass** die Weiterleitungsdaten (15, 15') eine oder mehrere von einer Anwendung eingefügte Weiterleitungsregeln (22, 22', 22") enthalten.

21. Verfahren nach Anspruch 20,
**dadurch gekennzeichnet,**
**dass** die Weiterleitungsregel einen Hinweis auf die Anwendung (22, 22', 22") enthält, welche die Regel aufstellt.

22. Verfahren nach Anspruch 20 oder 21,
**dadurch gekennzeichnet,**
**dass** das Kommunikations-Subsystem (4) ein Weiterleitungs-Entscheidungsmittel enthält, das entscheidet, wie das Datenpaket (11) aufgrund der Weiterleitungsregeln weiterzuleiten ist.

23. Verfahren nach einem der Ansprüche 1 bis 22,
**dadurch gekennzeichnet,**
**dass** die Weiterleitungsdaten (15, 15') mindestens zwei verschiedene Weiterleitungsschemata enthalten.

24. Verfahren nach Anspruch 23,
**dadurch gekennzeichnet,**
**dass** die Weiterleitungsdaten (15, 15') eine Kennung für jedes Weiterleitungsschema enthalten.

25. Verfahren nach Anspruch 23 oder 24,
**dadurch gekennzeichnet,**
**dass** die Daten bezüglich eines Weiterleitungsschemas innerhalb der Hauptdaten (11) verschlüsselt sind.

26. Verfahren nach einem der Ansprüche 1 bis 25,
**dadurch gekennzeichnet,**
**dass** die Weiterleitungsdaten (15, 15') eine Lebensdauer-Information enthalten, welche ein Zeitlimit für die Weiterleitung der Hauptdaten (14, 14') setzt.

27. Knoten für die Weitergabe von Hauptdaten (14, 14') über ein Netz, wobei der Knoten ein Anwendungs-Subsystem (3) zur Bereitstellung des Ausführungsraums für softwarenahe (bzw. hochwertige) Datenverarbeitung (5) und ein Kommunikations-Subsystem (4) zur Bereitstellung des Ausführungsraums für hardwarenahe (bzw. niederwertige) Datenverarbeitung (6) enthält, wobei das Kommunikations-Subsystem in der Lage ist, eine Datenübertragung (7) zu einem weiteren Knoten (2, 2', 2") im Netz (1) zu ermöglichen, und das Kommunikations-Subsystem (4) ein Datenweitergabe-Mittel (9) zur Weitergabe von Hauptdaten über das Netz (1) gemäß einem Verfahren nach einem der Ansprüche 1 bis 26 enthält.

28. Knoten nach Anspruch 27,
**dadurch gekennzeichnet,**
**dass** das Weitergabe-Mittel des Kommunikations-Subsystems einen
Nachrichten-Multiplexer (18) für die Herstellung einer Huckepack-Verbindung zwischen einem Datenpaket und einer abgehenden Nachricht enthält, wobei das Datenpaket aus den Hauptdaten mit angehängten Weiterleitungsdaten erzeugt wird, welche die Abfertigungsdetails für die Hauptdaten spezifizieren.

29. Knoten nach Anspruch 27 oder 28,
**dadurch gekennzeichnet,**
**dass** das Weitergabe -Mittel des Kommunikations-Subsystems einen Nachrichten-Demultiplexer (18) zur Abtrennung eines Datenpakets von einer eingehenden Nachricht enthält, wobei das Datenpaket aus den Hauptdaten mit angehängten Weiterleitungsdaten erzeugt wird, welche die Abfertigungsdetails für die Hauptdaten spezifizieren.

30. Knoten nach einem der Ansprüche 27 bis 29,
**dadurch gekennzeichnet,**
**dass** das Kommunikations-Subsystem (4) ein Weiterleitungs-Mittel zur Auswertung der die Hauptdaten betreffenden Weiterleitungsdaten und zur Steuerung der Huckepack-Verbindung eines die Hauptdaten enthaltenden Datenpakets auf Grundlage des Inhalts der Weiterleitungsdaten enthält.

31. Netz zur Weitergabe von Hauptdaten von einem Ursprungsknoten an einen oder mehrere Empfangsknoten, wobei mindestens der Ursprungsknoten und ein Empfangsknoten einem Knoten (2, 2', 2") nach einem der Ansprüche 27 bis 30 entsprechen, so dass im Netz (1) ein Anwendungs-Subsystem (3) zur Bereitstellung des Ausführungsraums für softwarenahe Datenverarbeitung und ein Kommunikations-Subsystem (4) zur Bereitstellung des Ausführungsraums für hardwarenahe Datenverarbeitung erzeugt werden, wobei das Kommunikations-Subsystem ein Datenweitergabe-Mittel (9) zur Weitergabe der Hauptdaten (14, 14') über das Netz gemäß einem Verfahren nach einem der Ansprüche 1 bis 26 enthält.

## Revendications

1. Procédé de diffusion des données de corps à travers un réseau (1) comprenant des étapes consistant à :
- former un paquet de données (11) dans un noeud source (2, 2', 2") fournissant les données de corps (14, 14') en joignant aux données de corps des données de transmission (15, 15') qui spécifient les détails d'envoi des données de corps (14, 14'),
- superposer le paquet de données (11) dans le noeud source (2, 2', 2") sur un message (21), qui est destiné à être envoyé par le noeud source (2, 2', 2") à un noeud de réception (2, 2', 2") par l'intermédiaire d'une connexion réseau explicite,
- envoyer le message (21) avec le paquet de données (11) superposé du noeud source au noeud de réception au moyen de la connexion réseau explicite établie entre les deux noeuds,
- recevoir le message (21) avec le paquet de données (11) superposé sur le noeud de réception (2, 2', 2") et séparer le paquet de données (11) du message (21),
- diviser le paquet de données (11) dans le noeud de réception (2, 2', 2") en données de transmission (15) et en données de corps (14),
- évaluer les données de transmission (15) dans le noeud de réception (2, 2', 2") et transmettre une copie des données de corps (14) au sous-système d'application (5) du noeud de réception (2, 2', 2") dans le cas où le noeud de réception est indiqué comme destinataire dans les données de transmission (15),
- modifier les données de transmission (15) dans le noeud de réception (2, 2', 2") en en retirant le noeud de réception si celui-ci est indiqué comme destinataire,
- former un paquet de données modifiées (15') dans le noeud de réception (2, 2', 2") en joignant les données de transmission modifiées (15') aux données de corps (14, 14'),
- superposer le paquet de données modifiées dans le noeud de réception (2, 2', 2") sur un autre message (21) qui est destiné à être envoyé par le noeud de réception (2, 2', 2") à un autre noeud de réception (2, 2', 2") par l'intermédiaire d'une autre connexion réseau explicite, et
- envoyer l'autre message (21) avec le paquet de données modifiées superposé du noeud de réception (2, 2', 2") à l'autre noeud de réception (2, 2', 2") au moyen de l'autre connexion réseau explicite établie entre les deux noeuds,
moyennant quoi chaque étape est effectuée dans le sous-système de communication (4) de chaque noeud (2, 2', 2") concerné.

2. Procédé selon la revendication 1,
**caractérisé en ce que**
le sous-système de communication est défini par l'espace d'exécution pour le traitement d'informations de faible niveau (6) et la transmission de données (7).

3. Procédé selon la revendication 2,
**caractérisé en ce que**
le sous-système de communication est un espace d'exécution formé par une Couche de Liaison et un Contrôle d'Accès au Support.

4. Procédé selon la revendication 3,
**caractérisé en ce que**
l'espace d'exécution du sous-système de communication comprend un Contrôle de Liaison de Données.

5. Procédé selon l'une des revendications 1 à 4,
**caractérisé en ce que**
chaque message (21) pour le paquet de données (11) superposé est sélectionné à condition que le noeud de réception ou l'autre noeud de réception pour le message soit listé comme destinataire dans les données de transmission (15) du paquet de données (11).

6. Procédé selon l'une des revendications 1 à 5,
**caractérisé en ce que**
le paquet de données (11) est superposé sur un message (21) en ajoutant un ou plusieurs champs supplémentaires au cadre de message contenant le message et en prenant le paquet de données dans les champs supplémentaires.

7. Procédé selon l'une des revendications 1 à 5,
**caractérisé en ce que**
le paquet de données (11) est superposé sur un message (21) en prenant le paquet de données dans un ou plusieurs champs du cadre de message contenant le message qui sont réservés à l'utilisation par une application.

8. Procédé selon la revendication 7,
**caractérisé en ce que**
la présence d'un paquet de données (11) dans le cadre de message est indiquée dans un champ existant ou dans un champ supplémentaire, dans les deux cas dans l'en-tête du cadre de message.

9. Procédé selon l'une des revendications 1 à 8,
**caractérisé en ce que**
le paquet de données (11) est superposé sur un message (21) contenu dans un cadre de message en remplaçant une information dans un cadre de message par le paquet de données.

10. Procédé selon la revendication 9,
**caractérisé en ce que**
l'information à remplacer par le paquet de données (11) est une information redondante.

11. Procédé selon la revendication 10,
**caractérisé en ce que**
le remplacement de l'information redondante est indiqué dans un cadre de message précédent.

12. Procédé selon la revendication 10,
**caractérisé en ce que**
le remplacement de l'information redondante est limité à des cadres de message prédéfinis parmi une série de cadres de message comportant l'information redondante.

13. Procédé selon la revendication 9,
**caractérisé en ce que**
le remplacement de l'information est indiqué dans le cadre de message contenant le message (21).

14. Procédé selon la revendication 13,
**caractérisé en ce que**
l'indication du remplacement est donnée dans un champ existant de l'en-tête du cadre de message ou dans un champ ajouté à l'en-tête du cadre de message.

15. Procédé selon la revendication 13,
**caractérisé en ce que**
l'indication du remplacement de l'information est donnée par un indicateur connu du sous-système de communication (4).

16. Procédé selon la revendication 15,
**caractérisé en ce que**
l'indicateur est formé par l'adresse du noeud source (2, 2', 2").

17. Procédé selon la revendication 13,
**caractérisé en ce que**
l'indication du remplacement de l'information est rendue disponible au moyen d'une Vérification de Redondance Cyclique orthogonale.

18. Procédé selon l'une des revendications 1 à 17,
**caractérisé en ce que**
les données de corps (14, 14') contiennent seulement une information d'annonce liée à des détails de délivrance de données qui sont prêtes à être collectées par un noeud de réception (2, 2', 2") ou un autre noeud de réception (2, 2', 2") au moyen d'une connexion réseau explicite avec un noeud source (2, 2', 2").

19. Procédé selon l'une des revendications 1 à 5,
**caractérisé en ce que**
le paquet de données (11) est superposé sur un message (21) en le mettant dans un segment de la section de données utiles du cadre de message qui est partagé par le message (21) qui y est contenu.

20. Procédé selon l'une des revendications 1 à 19,
**caractérisé en ce que**
les données de transmission (15, 15') contiennent une ou plusieurs règles de transmission insérées à partir d'une application (22, 22', 22").

21. Procédé selon la revendication 20,
**caractérisé en ce que**
la règle de transmission contient une indication de l'application (22, 22', 22") établissant la règle.

22. Procédé selon la revendication 20 ou 21,
**caractérisé en ce que**
le sous-système de communication (4) comprend un moyen de décision de transmission pour décider de quelle manière transmettre le paquet de données (11) sur la base des règles de transmission.

23. Procédé selon l'une des revendications 1 à 22,
**caractérisé en ce que**
les données de transmission (15, 15') contiennent au moins deux schémas de transmission différents.

24. Procédé selon la revendication 23,
**caractérisé en ce que**
un identificateur pour chaque schéma de transmission est présent dans les données de transmission (15, 15').

25. Procédé selon la revendication 23 ou 24,
**caractérisé en ce que**
des données liées à un schéma de transmission sont codées dans les données de corps (11).

26. Procédé selon l'une des revendications 1 à 25,
**caractérisé en ce que**
les données de transmission (15, 15') contiennent une information de durée de vie définissant une limite temporelle pour transmettre les données de corps (14, 14').

27. Noeud pour diffuser des données de corps (14, 14') à travers un réseau, le noeud comprenant un sous-système d'application (3) destiné à fournir l'espace d'exécution pour le traitement de données de niveau élevé (5) et un sous-système de communication (4) destiné à fournir l'espace d'exécution pour le traitement de données de faible niveau (6), moyennant quoi le sous-système de communication est conçu pour permettre une transmission de données (7) vers un autre noeud (2, 2', 2") sur le réseau (1) et le sous-système de communication (4) comprend un moyen de diffusion d'informations (9) destiné à diffuser les données de corps (11) à travers le réseau (1) correspondant à un procédé selon l'une des revendications 1 à 26.

28. Noeud selon la revendication 27,
**caractérisé en ce que**
le moyen de diffusion du sous-système de communication comprend un multiplexeur de message (18) destiné à superposer un paquet de données sur un message sortant, moyennant quoi le paquet de données est formé par les données de corps avec des données de transmission jointes spécifiant les détails d'envoi pour les données de corps.

29. Noeud selon la revendication 27 ou 28,
**caractérisé en ce que**
le moyen de diffusion du sous-système de communication comprend un démultiplexeur de message (10) destiné à séparer un paquet de données d'un message entrant, moyennant quoi le paquet de données est formé par les données de corps avec les données de transmission jointes spécifiant les détails d'envoi pour les données de corps.

30. Noeud selon l'une des revendications 27 à 29,
**caractérisé en ce que**
le sous-système de communication (4) comprend un moyen de transmission destiné à évaluer les données de transmission liées aux données de corps et destiné à contrôler la superposition d'un paquet de données contenant les données de corps sur la base du contenu des données de transmission.

31. Réseau destiné à diffuser des données de corps depuis un noeud source vers un ou plusieurs noeuds de réception, avec au moins le noeud source et un noeud de réception correspondant à un noeud (2, 2', 2") selon l'une des revendications 27 à 30 formant ainsi sur le réseau (1) un sous-système d'application (3) destiné à fournir l'espace d'exécution pour le traitement d'informations de niveau élevé et un sous-système de communication (4) destiné à fournir l'espace d'exécution pour le traitement d'informations de faible niveau, moyennant quoi le sous-système de communication comprend un moyen de diffusion d'informations (9) destiné à diffuser les données de corps (14, 14') à travers le réseau correspondant à un procédé selon l'une des revendications 1 à 26.
